# EUROPÄISCHE PATENTANMELDUNG

(11) **EP 4 625 075 A1**
(43) Veröffentlichungstag der Anmeldung: **01.10.2025**
(21) Anmeldenummer: 24166871.4
(22) Anmeldetag: 27.03.2024
(51) Int. Cl.: G05B 19/18

(54) **INTERPOLATIONSDREHEN**

(71) Anmelder: Tebis Technische Informationssysteme AG, 82152 Martinsried (DE)
(72) Erfinder: RÜGER, Michael, 82152 Martinsried (DE); TIEFENBECK, Matthias, 82152 Martinsried (DE); WEISS, Christian, 82152 Martinsried (DE); BREIT, Alexander, 82152 Martinsried (DE); KULBACH, Roderich, 82152 Martinsried (DE); DITTMAT, Jakub, 82152 Martinsried (DE)
(74) Vertreter: Winter, Brandl - Partnerschaft mbB

(57) **Zusammenfassung**

Offenbart sind ein Verfahren und eine elektronische Maschinensteuerung und eine Werkzeugmaschine, mit denen ein sechsachsiges Interpolationsdrehen von rotationssymmetrischen Abschnitten (7a) von Werkstücken (7) möglich ist.

## Beschreibung

### Technisches Gebiet

Die vorliegende Offenbarung betrifft Interpolationsbearbeiten, insbesondere Interpolationsdrehen. Beim Interpolationsdrehen handelt es sich um eine Fertigungstechnologie beispielsweise für rotationssymmetrische Abschnitte von Werkstücken, bei der ein Drehwerkzeug um das Werkstück rotiert.

### Hintergrund der Offenbarung

Insbesondere bei rotationssymmetrischen Abschnitten auf unsymmetrischen Werkstücken kommt eine klassische Drehbearbeitung oft nicht in Frage, da kein praxisgerechtes Einspannen mit Symmetrieachse des rotationssymmetrischen Abschnitts in der Mitte eines rotierenden Werkstückträgers möglich ist. Diese Abschnitte müssen entweder gefräst werden oder mit einem Ausspindelwerkzeug bearbeitet oder mittels eines sogenannten Interpolationsdrehens gefertigt werden, bei dem das (Scheid-) Werkzeug (zusätzlich) um das Werkstück spanabhebend geführt wird.

Im Allgemeinen hat eine für ein Interpolationsdrehen vorgesehene Werkzeugmaschine eine Werkzeuglagerung mit einem Werkzeugfutter, das längs einer Werkzeuglagerungs-internen Höhenachse C) sowie in die Querrichtungen dazu (Werkzeuglagerungs-interne A-, B-Achse) translatorisch bewegbar und um eine Werkzeugfutter-interne Höhenachse S rotierbar ist. Zusätzlich ist die Werkzeuglagerung dafür vorgesehen, die Werkzeugfutter-interne Höhenachse S um die Werkzeuglagerungs-internen A- und/oder B-Achsen zu neigen oder parallel zur Werkzeuglagerungs-internen Höhenachse C auszurichten. Des Weiteren hat die für ein Interpolationsdrehen vorgesehene Werkzeugmaschine eine Werkstückhalterung mit einer Werkstückaufnahme, wobei die Werkstückhalterung um eine Werkstückhalterung-interne Höhenachse Z (achsparallel zur Werkzeuglagerungs-internen Höhenachse C) rotierbar ist und die Werkstückaufnahme (linear) auf der Höhenachse Z liegt oder dazu parallelverschoben ist. Außerdem kann die Aufnahmerichtung M der Werkstückaufnahme mit Bezug zur Werkstückhalterung-internen Höhenachse Z geneigt sein oder werden.

Die konstruktive Gestaltung einer Werkzeugmaschine gemäß der vorstehenden Beschreibung entspricht auch einem Ausführungsbeispiel der vorliegenden Offenbarung.

Die Einschränkung beim klassischen Interpolationsdrehen bestand bisher darin, dass die Neigung des Werkzeugfutters (der Werkzeugfutterachse S ) um die Achsen A bzw. B, über einen gesamten Bearbeitungsvorgang konstant blieb.

Beim Interpolationsdrehen gemäß dem Stand der Technik bleibt, im Gegensatz zum konventionellen Drehen, die Werkstückhalterung (auch als Werkstückträger bezeichnet) und damit die Werkstückaufnahme oft starr stehen. Stattdessen erfolgt die Schnittbewegung durch Spiral-/Umlaufbewegungen des Werkzeugs um das Werkstück.. Je nach Bauart der Maschine bewegt sich das Werkstück auch beim Interpolationsdrehen gemäß dem Stand der Technik zusätzlich im Raum relativ zu dem sich ebenfalls im Raum bewegenden Werkzeug. Unabhängig davon ist die Voraussetzung zum Interpolationsdrehen aber die Möglichkeit, die Rotation des Werkzeugfutters um die Futterlängsachse S in einem sogenannten lagegeregelten Betrieb zu steuern, da die spanabhebende Eingriffsrichtung des Werkzeugs zum Werkstück in Abhängigkeit der relativen Ausrichtung des Werkzeugs zum Werkstück kontinuierlich nachgesteuert/nachgeregelt werden muss.

Die Qualität des durch Interpolationsdrehen entstandenen Werkstücks ist vergleichbar mit den Bearbeitungsergebnissen von Werkstücken, die auf konventionellen Drehmaschinen hergestellt wurden. Insbesondere können Werkstücke, die in ihrer Herstellung sehr komplex sind, also z.B. nur abschnittsweise rotationssymmetrisch sind, schnell und komplett auf einer Maschine bearbeitet werden.

Vorteile des Interpolationsdrehens gegenüber dem Zirkularfräsen sind:
- Werkzeug wesentlich steifer --> bessere Zerspanleistung,
- Schneide kontinuierlich im Eingriff --> bessere Oberflächenqualität,
- bessere Werkzeugstandzeit (bis zu 8-fache Standmenge pro Schneidkante)
- Sehr gute Erreichbarkeit schwer zugänglicher Werkstückbereiche. Hier müsste ansonsten oft mit Formfräsern gearbeitet werden, was wesentlich kostenintensiver ist. Manche Bereiche sind aber auch damit gar nicht zugänglich.

### Stand der Technik

Aus der DE 195 37 292 A1 ist ein Verfahren sowie eine Werkzeugmaschine bekannt, bei denen eine Werkzeugspindel um eine Werkzeugspindelachse und synchron dazu um eine Rotationsachse rotiert, derart, dass eine Schneide eine Drehbearbeitung an einem in der Werkzeugmaschine fixierten Werkstück ausführt. Während sich beim klassischen Drehen die Drehkontur aus der Bewegung der Schneide relativ zu dem um eine Werkstückachse rotierenden Werkstück ergibt, bewegt sich bei dem aus der genannten Offenlegungsschrift bekannten Interpolationsdrehen das Werkzeug mit rotierender Schneide um die Symmetrieachse des Werkstücks entlang der zu fertigenden Kontur.

Aus der EP 3 582 043 A1 sind ein Verfahren zur Steuerung einer Relativbewegung zwischen einem Werkzeug und einem Werkstück zur Bearbeitung des Werkstücks mittels einer Werkzeugmaschine, eine numerische Steuereinrichtung zur Durchführung eines derartigen Verfahrens sowie eine Werkzeugmaschine mit einer derartigen numerischen Steuereinrichtung bekannt. Es werden ein Maschinenkoordinatensystem in Bezug zu einer Maschinenbasis der Werkzeugmaschine und ein Rotationskoordinatensystem in Relation zu dem Maschinenkoordinatensystem festgelegt. Die Druckschrift offenbart Interpolationsdrehen. Es werden drei Linear- und drei Rund- bzw. Drehachsen genannt.

Auch die mit der letztgenannten Druckschrift verwandte EP 3 958 075 A1 offenbart Interpolationsdrehen. Es werden drei Linear- und drei Rund- bzw. Drehachsen genannt.

Welche Interpolationsart zum Einsatz kommt, bzw. wie viele Achsen notwendig sind bzw. bewegt werden müssen, um per Interpolationsdrehen einen rotationssymmetrischen Abschnitt zu fertigen, hängt von der Ausrichtung der Symmetrieachse des rotationssymmetrischen Abschnitts in der Werkzeugmaschine, sowie der Richtung der Spindelachse ab.

Wenn die Symmetrieachse des rotationssymmetrischen Abschnitts und die Spindelachse beide parallel zur Werkstückhalterachse (Tischachse) der Werkzeugmaschine sind, dann kann über eine translatorische Bewegung der Spindel hinausgehend entweder
- mit Spindel interpolation gefertigt werden, bei der der Werkstückhalter (Tisch) ruht, und die Spindel rotiert, oder
- mit Werkstückhalterinterpolation (Tischinterpolation) gefertigt werden, bei der der Werkstückhalter (Tisch) rotiert, und die Spindel nicht rotiert.

Wenn nur die Symmetrieachse des rotationssymmetrischen Abschnitts parallel zur Werkstückhalterachse (Tischachse) der Werkzeugmaschine ist, und wenn die Spindelachse dazu schräg angestellt werden muss, dann muss über eine translatorische Bewegung der (schräg angestellten) Spindel hinausgehend
- mit Werkstückhalterinterpolation (Tischinterpolation) gefertigt werden, bei der der Werkstückhalter (Tisch) rotiert, und die Spindel nicht rotiert.

Wenn die Spindelachse und die Symmetrieachse des rotationssymmetrischen Abschnitts parallel zueinander und beide in gleicher Weise schräg zur Werkstückhalterachse (Tischachse) angestellt sind, dann muss über eine translatorische Bewegung der Spindel hinausgehend
- mit Spindelinterpolation gefertigt werden, bei der der (schräg angestellte) Werkstückhalter (Tisch) ruht, und die Spindel rotiert.

Das gleiche gilt, wenn die Betrachtungsweise geändert wird, wenn also die Spindelachse parallel zur Symmetrieachse des rotationssymmetrischen Abschnitts ist, wenn aber die Werkstückhalterachse (Tischachse) schräg zu diesen beiden Achsen ist.

Mittels Interpolationsdrehen werden also symmetrische Merkmale (ein rotationssymmetrischer Abschnitt) auf unsymmetrischen Teilen mit einem Drehwerkzeug gefertigt. Das Werkzeug führt eine annähernd kreisförmige Bewegung mit den Linearachsen aus. Während dessen wird die Schneide bei Außenbearbeitungen immer auf das Zentrum des Kreises orientiert, bei Innenbearbeitungen vom Zentrum weg. Voraussetzung bezüglich der Werkzeugmaschine: Die Spindelachse muss einen lagegeregelten Betrieb unterstützen und sich gleichmäßig interpolierend fahren lassen.

Das Fertigungsmerkmal (der rotationssymmetrische Abschnitt) kann in eine beliebige Richtung im Raum zeigen. Über die Rotationsachsen der Werkzeugmaschine wird ggf. eine Anstellung erzeugt, so dass die Spindelachse parallel zur Symmetrieachse des zu fertigenden symmetrischen Merkmals (des rotationssymmetrischen Abschnitts) steht. In der Folge müssen nur die 3 Linearachsen bewegt werden, sowie die Spindelachse zur Orientierung der Schneide.

In dieser Schrift ist das Interpolationsdrehen als Herstellung von rotationsymmetrischen Abschnitten und das (dem gegenüber breitere) Interpolationsbearbeiten als Herstellung auch von nicht rotationssymmetrischen Abschnitten zu verstehen.

Nachteilig an dem Vier-Achs-Interpolationsdrehen des Standes der Technik ist, dass Bearbeitungsbereiche von Werkstücken mittels herkömmlichen Werkzeugen nicht kollisionsfrei erreichbar sind.

### Kurzbeschreibung der Offenbarung

Aufgabe der vorliegenden Offenbarung ist es, die Flexibilität bei der Formgebung bzw. Geometrie eines zu fertigenden Abschnitts eines Werkstücks zu erhöhen. Vorzugsweise ist es eine weitere Aufgabe der vorliegenden Offenbarung, die (vollständige) Bearbeitung eines Werkstücks in einem ununterbrochenen, automatischen Ablauf ohne Kollisionen zwischen Werkzeug und Werkstück durchzuführen.

Diese Aufgabe wird gelöst durch ein Verfahren mit den Merkmalen des Patentanspruchs 1 und durch eine Werkzeugmaschine mit den Merkmalen des Patentanspruchs 10.

Vorteilhafte Ausgestaltungen der Offenbarung sind Gegenstand der Unteransprüche.

Das offenbarungsgemäße Verfahren dient zum spanenden Interpolationsbearbeiten eines Abschnitts eines Werkstücks mittels einer Werkzeugmaschine, die eine Werkstückhalterung mit Werkstückaufnahme (Werkstückhalter), insbesondere einen Werkstücktisch mit einer Tischfläche, und eine Werkzeuglagerung mit Werkzeugfutter (beispielsweise eine Werkzeug-aufnehmende Spindel mit einen, eine Schneide aufweisenden Werkzeug) aufweist. Das Werkzeug/ die Schneide wird mittels einer von einer Spindelachse der Spindel gebildeten ersten rotatorisch angetriebenen Maschinenachse relativ zu einem Abschnitt des Werkstücks simultan gesteuert bewegt. Vorzugsweise ist diese Bewegung umlaufend rotierend. Weiterhin wird die Relativposition des Werkzeugs / der Schneide relativ zum Abschnitt des Werkstücks mittels dreier translatorisch angetriebener Maschinenachsen simultan gesteuert. Offenbarungsgemäß wird die Relativposition des Werkstücks / der Schneide relativ zum Abschnitt auch mittels zweier weiterer rotatorisch angetriebener Maschinenachsen simultan gesteuert, womit das Interpolationsbearbeiten ein - insbesondere sechsachsiges - simultanes Interpolationsbearbeiten des zu bearbeitenden Abschnitts des Werkstücks ist. Dieses erfindungsgemäße Verfahren hat den Vorteil, dass dabei auch spezielle Formgebungen wie z.B. Hinterschnitte gefertigt werden können, ohne dabei auf Werkzeuge zurückgreifen zu müssen, die auf die Formgebund angepasst produziert werden.

In anderen Worten ausgedrückt sieht das offenbarungsgemäße Verfahren zur Ausführung eines spanenden Interpolationsbearbeitungsvorgangs an zumindest einem Abschnitt eines Werkstücks unter Verwendung einer Werkzeugmaschine die folgenden Voraussetzungen seitens der Werkzeugmaschine und die folgenden Maßnahmen vor: Die Werkzeugmaschine hat eine Werkstückhalterung (beispielsweise Werkstücktisch oder Werkstückspindel) mit Werkstückaufnahme (beispielsweise Einspannvorrichtung für ein Werkstück auf dem Werkstücktisch oder an der Werkstückspindel) und eine Werkzeuglagerung (beispielsweise Werkzeugschlitten) mit Werkzeugfutter (beispielsweise Werkzeugspindel an/in Werkzeugschlitten) aufweist. Damit ist es beispielsweise möglich, den Werkstücktisch zumindest zu rotieren und das Werkzeug um dessen Längsachse zu drehen, relativ zum Werkstück zu neigen, um das Werkstück auf einer Umlaufbahn zu bewegen sowie relativ zum Werkstück translatorisch zu verschieben.
Offenbarungsgemäß die Werkstückhalterung und die Werkzeuglagerung betrieben werden, um
- eine Translation (-bewegung) eines im Werkzeugfutter aufgenommenen Werkzeugs zum, in der Werkstückaufnahme aufgenommenen Werkstück und/oder umgekehrt längs einer X-, Y-, und Z-Achse der Werkstückhalterung und/oder des Werkzeugfutters auszuführen,
- eine Neigung (-bewegung) des Werkzeugs zum Werkstück und/oder umgekehrt parallel zu einer X-Z-Ebene und/oder einer Y-Z-Ebene der Werkstückhalterung und/oder des Werkzeugfutters auszuführen und
- eine Drehung (-bewegung) des Werkzeugs zum Werkstück und/oder umgekehrt um die Z-Achse der Werkzeughalterung und/oder des Werkzeugfutters auszuführen,
wobei die Translation(-bewegung), die Neigung (-bewegung) und die Drehung (-bewegung) simultan so gesteuert/geregelt werden, dass über den gesamten Bearbeitungsvorgang (in einer fortlaufenden Bewegung) eine jeweils vordefinierte Werkzeug-Werkstück-Eingriffsposition mit einer vordefinierten Relativneigungs- und Relativdrehstellung realisiert wird.

Wenn der Abschnitt des Werkstücks rotationssymmetrisch zu einer Symmetrieachse gefertigt werden soll, auch wenn der Rest des Werkstücks nicht rotationssymmetrisch dazu ist, ist das Interpolationsbearbeiten ein - insbesondere sechsachsiges - simultanes Interpolationsdrehen des rotationssymmetrischen Abschnitts. Dieses besonders bevorzugte Verfahren hat den Vorteil, dass spezielle Formgebungen wie z.B. Hinterschnitte, bei denen beim Vier-Achs-Interpolationsdrehen gemäß dem Stand der Technik Kollisionen drohten, nunmehr ohne Kollisionsrisiko gefertigt werden können.

Mit dem erfindungsgemäßen 6-Achs-simultan-Interpolationsdrehen ist man nicht mehr auf eine (fixe) Anstellungsrichtung der Maschine (beispielsweise parallel zur Symmetrieachse des Fertigungsmerkmals (rotationssymmetrischen Abschnitts) festgelegt, sondern die Anstellung der Werkzeugs zum Werkstück kann simultan zu den Bewegungsabläufen gemäß der anderen Freiheitsgrade automatisch gesteuert/geregelt werden.

Der gewünschte Neigungswinkel des Werkzeugs relativ beispielsweise zur Symmetrieachse des Werkstücks (des rotationssymmetrischen Abschnitts) kann somit offenbarungsgemäß über die gesamte Bearbeitung konstant gehalten werden. Das Werkzeug bewegt sich also auf einem Kegel um das Werkzeug. Hieraus ergibt sich im allgemeinen Fall - also bei beliebiger Raumlage des Werkzeugs (rotationssymmetrischen Abschnitts) - eine Bewegung, in der sich kontinuierlich alle 6 beteiligten Achsen bewegen. Dies sind im Allgemeinen: 3 Linearachsen (XYZ) beispielsweise des Werkzeugs; 2 Anstellachsen (rotatorische Achsen um eine Anstellung des Werkzeugs mit Bezug zum Werkstück zu erzeugen); 1 Spindelachse (zur Drehung des Werkzeugs um seine Längsachse zur Ausrichtung /Justierung des spanabhebenden Eingriffs des Werkzeugs am Werkstück, d.h. zur individuellen Ausrichtung beispielsweise einer Schneide hin zum Werkstück).

Die flexible Anstellung des Werkzeugs zum Werkstück (zum rotationssymmetrischen Abschnitt) ermöglicht die Bearbeitung von Werkstückbereichen, die auf Grund der Werkstückgeometrie oder der Spannsituation bisher entweder gar nicht, oder nur mit längeren Werkzeugen oder Umspannen des Werkzeugs oder des Werkstücks kollisionslos erreichbar waren.

Hiermit sind die folgenden Vorteile verbunden:
- Es können Kollisionen zwischen Werkzeug und Werkstück vermieden werden.
- Es können Werkstückbereiche bearbeitet werden, die sonst nicht kollisionsfrei erreichbar waren.
- Es können kürzere Werkzeuge gegenüber einer nicht (dynamisch) angestellten Bearbeitung eingesetzt werden, um Bereiche kollisionsfrei zu erreichen.
- Es können Schnittbedingungen verbessert werden (andere Schneidenumschlingung und anderer Tauchwinkel im Materialeingriff). Der Einsatz von Standardwerkzeugen wird somit vereinfacht.
- Spezielle, auf die Fertigungsgeometrie angepasste Formfräser sind entbehrlich.

Bei einer besonders bevorzugten Weiterbildung des Verfahrens erfolgt die CAM-Programmierung auf Basis eines 2-dimensionalen Konturprofils. Hieraus wird eine 3-dimensionale Spiralbahn generiert und für jede Position die 3 zugehörigen Achswinkel errechnet. Die gesamte Fahrbewegung wird simuliert und kollisionsgeprüft. Die zugehörigen NC-Koordinaten umfassen beispielsweise: eine Position bezogen auf einen beliebigen werkstückbezogenen kartesischen Bezugspunkt (X/Y/Z), die Stellung der beiden Anstellachsen, sowie die Stellung der Spindelachse. Bei einer NC-Ausgabe lassen sich für jeden NC-Punkt alle 6 Werte ausgeben. Mittels eines nativen NC-Codes lassen sich die NC-Programme auf beliebigen Maschinensteuerungen abfahren, ohne von speziellen Maschinenzyklen abhängig zu sein.

Die drei translatorischen Maschinenachsen werden vorzugsweise alle oszillierend bewegt. In Sonderfällen, nämlich falls die Symmetrieachse parallel zu X oder Y ist, fährt die entsprechende Achse nicht oszillierend, sondern bleibt konstant oder fährt kontinuierlich bis zu einem Endwert.

Die Relativbewegung um die beiden weiteren rotatorischen Maschinenachsen kann durch jeweiliges oszillierendes Schwenken erfolgen.

Bevorzugt erfolgt die Relativbewegung um die beiden weiteren rotatorischen Maschinenachsen durch oszillierendes Schwenken und durch vollumfängliches Drehen.

Bei einer ersten konkreten Ausgestaltung ist das Schwenken ein Schwenken der Spindel und der Spindelachse um eine Schwenkachse gegenüber einer Spindelhalterung, während das Drehen ein Drehen des Werkstückhalters um eine Drehachse gegenüber einer Maschinenkomponente ist. Vorzugsweise wird dabei die Spindelhalterung entlang zweier translatorischer Maschinenachsen gegenüber einem Werkzeugmaschinenrahmen bewegt, während die Maschinenkomponente entlang der weiteren (dritten) translatorischen Maschinenachse gegenüber dem Werkzeugmaschinenrahmen bewegt wird.

Alternativ kann auch das Schwenken ein Schwenken des Werkstückhalters um eine Schwenkachse gegenüber einer Maschinenkomponente sein, während das Drehen ein Drehen der Spindel und der Spindelachse um eine Drehachse gegenüber einer Spindelhalterung ist. Vorzugsweise wird auch dabei die Spindelhalterung entlang zweier translatorischer Maschinenachsen gegenüber einem Werkzeugmaschinenrahmen bewegt, während die Maschinenkomponente entlang der weiteren (dritten) translatorischen Maschinenachse gegenüber dem Werkzeugmaschinenrahmen bewegt wird.

Bei einer zweiten konkreten Ausgestaltung ist das Schwenken ein Schwenken der Spindel und damit der Spindelachse um eine Schwenkachse gegenüber einer Maschinenkomponente, während das Drehen ein Drehen der Maschinenkomponente um eine Drehachse gegenüber einer Spindelhalterung ist, die vorzugsweise entlang den drei translatorischen Maschinenachsen gegenüber einem Werkzeugmaschinenrahmen bewegt wird.

Bei einer dritten konkreten Ausgestaltung ist das Schwenken ein Schwenken des Werkstückhalters um eine Schwenkachse, während das Drehen ein Drehen des Werkstückhalters um eine Drehachse ist. Dabei wird die Drehachse zusammen mit dem Werkstückhalter um die Schwenkachse gegenüber einem Werkzeugmaschinenrahmen verschwenkt. Ein Gehäuse mit der Spindel und der Spindelachse wird vorzugsweise entlang der drei translatorischen Maschinenachsen gegenüber dem Werkzeugmaschinenrahmen bewegt.

Bei einer vierten konkreten Ausgestaltung ist das Schwenken ein Schwenken eines Gehäuses mit der Spindel und mit der Spindelachse um eine Schwenkachse gegenüber einer Spindelhalterung, während das Drehen ein Drehen des Werkstückhalters um eine Drehachse gegenüber einem Werkzeugmaschinenrahmen ist. Vorzugsweise wird die Spindelhalterung entlang der drei translatorischen Maschinenachsen gegenüber dem Werkzeugmaschinenrahmen bewegt.

Außer der Spindelachse können sämtliche 5 Achsen entweder vor oder nach dem Maschinengestell verbaut sein, und somit entweder den Werkstückträger samt Werkstück oder die weitere kinematische Kette samt Werkzeugträger bewegen. Dadurch ergeben sich eine Vielzahl von Ausführungsbeispiele, von denen die vorgenannten Ausführungsbeispiele nur einen Teil darstellen.

Bei einer bevorzugten Weiterbildung des erfindungsgemäßen Verfahrens (aller vorgenannten Ausführungsbeispiele) wird zuvor aus einer Geometrie des Abschnitts und vorzugsweise aus Fertigungsparametern eine Bahn der Schneide bestehend aus NC-Punkten für die Schneide generiert.

Bei einer bevorzugten Weiterbildung des erfindungsgemäßen Verfahrens werden die NC-Punkte über jeweils drei kartesische Bezugspunktkoordinaten definiert, die bezogen auf ein Bezugspunktachsensystem sind, das zum Werkstück fix ist. Weiterhin werden die NC-Punkte über eine jeweilige Stellung der Schneide relativ zum Werkstück definiert, wobei die Stellung ein Werkzeugvektor und eine Werkzeugdrehlage (=Schneidenausrichtung) sind.

Bei einer bevorzugten Weiterbildung des erfindungsgemäßen Verfahrens werden vor der Bearbeitung bzw. Fertigung des Abschnitts durch das Interpolationsdrehen und nach den im letzten Absatz genannten Schritten aus den Stellungen der Schneide die korrespondierenden Werte der Spindelachse und der zwei weiteren rotatorischen Maschinenachsen ermittelt.

Bei einer bevorzugten Weiterbildung des erfindungsgemäßen Verfahrens wird nach der Ermittlung der Werte der Spindelachse und der zwei weiteren rotatorischen Maschinenachsen unter Berücksichtigung der Kinematik der Werkzeugmaschine die gesamte Fahrbewegung simuliert und kollisionsgeprüft.

Bei einer bevorzugten Weiterbildung des erfindungsgemäßen Verfahrens werden die Werte der Spindelachse und der beiden weiteren rotatorischen Achsen für jeden NC-Punkt zusätzlich zu den kartesischen Bezugspunktkoordinaten im NC-Code ausgegeben.

Bei einer bevorzugten Weiterbildung des erfindungsgemäßen Verfahrens werden (hieraus) die benötigten Werte der physikalischen translatorischen Maschinenachsen errechnet und alle sechs Achsen gleichmäßig interpolierend von NC-Punkt zu NC-Punkt simultan bewegt.

Offenbart und damit beanspruchbar ist auch eine elektronische Maschinensteuerung einer Werkzeugmaschine, die zur Durchführung des vorbeschriebenen erfindungsgemäßen Verfahrens und der vorbeschriebenen bevorzugten Weiterbildungen des Verfahrens ausgelegt und eingerichtet ist.

Die oben genannte Aufgabe wird auch gelöst durch eine Werkzeugmaschine, die zum spanenden Interpolationsbearbeiten eines Abschnitts eines Werkstücks eingerichtet und ausgelegt ist, wobei die Werkzeugmaschine einen Werkstückhalter, insbesondere einen Werkstücktisch mit einer Tischfläche zur Aufnahme des Werkstücks und eine Spindel mit einer Schneide aufweist. Eine Relativposition der Schneide zum Werkstückhalter (und damit zum Abschnitt) ist mittels einer durch eine Spindellängsachse der Spindel gebildete erste rotatorische Maschinenachse und mittels dreier translatorischer Maschinenachsen simultan steuerbar. Erfindungsgemäß ist die Relativposition der Schneide zum Werkstückhalter (und damit zum Abschnitt) auch mittels zweier weiterer rotatorischer Maschinenachsen simultan steuerbar, womit die Werkzeugmaschine zum simultanen - insbesondere sechsachsigen - Interpolationsbearbeiten des Abschnitts vorbereitet und eingerichtet ist.

Wenn der Abschnitt des Werkstücks rotationssymmetrisch zu einer Symmetrieachse gefertigt werden soll, auch wenn der Rest des Werkstücks nicht rotationssymmetrisch dazu ist, ist das Interpolationsbearbeiten ein Interpolationsdrehen, womit die Werkzeugmaschine besonders bevorzugt zum simultanen - insbesondere sechsachsigen - Interpolationsdrehen des rotationssymmetrischen Abschnitts vorbereitet und eingerichtet ist. Diese Werkzeugmaschine hat den Vorteil, dass spezielle Formgebung wie z.B. Hinterschnitte, bei denen beim Vier-Achs-Interpolationsdrehen gemäß dem Stand der Technik Kollisionen drohen, gefertigt werden können.

Die beiden weiteren rotatorischen Achsen sind bei einer besonders bevorzugten Weiterbildung der Werkzeugmaschine für vollumfängliche Rotation ausgebildet und/oder vorbereitet. Bei den verschiedenen Anwendungen bzw. Fertigungsaufgaben und zur Vermeidung von Kollisionen wird dann aber eine oder werden dann beide weitere rotatorische Achsen (nur) oszillierend geschwenkt. Bei einer ersten konkreten Ausgestaltung ist die Spindel mit der Spindelachse über die Schwenkachse an eine Spindelhalterung gekoppelt, die vorzugsweise entlang zweier translatorischer Maschinenachsen (insbesondere entlang zweier Linearführungen) gegenüber einem Werkzeugmaschinenrahmen bewegbar ist. Der Werkstückhalter (z.B. der Werkstückisch) ist dann über die Drehachse an eine Maschinenkomponente (z.B. Tischhalterung) gekoppelt, die vorzugsweise entlang einer (dritten) translatorischen Maschinenachse (insbesondere entlang einer Linearführung) gegenüber dem Werkzeugmaschinenrahmen bewegbar ist.

Alternativ kann die Spindel über die Drehachse an eine Spindelhalterung gekoppelt sein, die entlang zweier translatorischer Maschinenachsen (insbesondere zweier Linearführungen) bewegbar ist, während der Werkstückhalter (z.B. der Werkstücktisch) über die Schwenkachse an eine Maschinenkomponente (z.B. Tischhalterung) gekoppelt ist, die entlang einer (dritten) translatorischen Maschinenachse (insbesondere Linearführung) gegenüber dem Werkzeugmaschinenrahmen bewegbar ist.

Bei einer zweiten konkreten Ausgestaltung ist die Spindel und damit die Spindelachse über die Schwenkachse an eine Maschinenkomponente gekoppelt, während die Maschinenkomponente über die Drehachse an eine Spindelhalterung gekoppelt ist. Die Spindelhalterung ist vorzugsweise entlang den drei translatorischen Maschinenachsen (insbesondere dreier Linearführungen) gegenüber einem Werkzeugmaschinenrahmen bewegbar.

Bei einer dritten konkreten Ausgestaltung ist der Werkstückhalter über die Drehachse und über die Schwenkachse in einer mechanischen Reihenschaltung an einen Werkzugmaschinenrahmen gekoppelt, wodurch vorzugsweise eine schaukelartige Verschwenkvorrichtung gebildet ist. Vorzugsweise ist die Spindel mit der Spindelachse entlang der drei translatorischen Maschinenachsen (insbesondere dreier Linearführungen) gegenüber einem Werkzeugmaschinenrahmen bewegbar.

Bei einer vierten konkreten Ausgestaltung ist die Spindel mit der Spindelachse über die Schwenkachse an eine Spindelhalterung gekoppelt, die vorzugsweise entlang der drei translatorischen Maschinenachsen (insbesondere entlang dreier Linearführungen) gegenüber einem Werkzeugmaschinenrahmen bewegbar ist. Der Werkstückhalter (z.B. der Werkstücktisch) ist dann über die Drehachse an den Werkzeugmaschinenrahmen gekoppelt. Vorzugsweise ist die Spindel in einem Gehäuse gelagert, das über die Schwenkachse an die Spindelhalterung gekoppelt ist.

Nachstehend werden drei Ausführungsbeispiele der vorliegenden Offenbarung auf der Basis der zugehörigen Figuren beschrieben.

### Dabei zeigt

Fig. 1 wesentliche Teile einer erfindungsgemäßen Werkzeugmaschine zur Durchführung des erfindungsgemäßen Verfahrens gemäß einem ersten Ausführungsbeispiel der vorliegenden Offenbarung;
Fig. 2 einen Ausschnitt der Werkzeugmaschine zur Durchführung des erfindungsgemäßen Verfahrens aus Fig. 1,
Fig. 3 wesentliche Teile einer erfindungsgemäßen Werkzeugmaschine zur Durchführung des erfindungsgemäßen Verfahrens gemäß einem zweiten Ausführungsbeispiel der vorliegenden Offenbarung;
Fig. 4 einen Ausschnitt der Werkzeugmaschine zur Durchführung des erfindungsgemäßen Verfahrens aus Fig. 3,
Fig. 5 wesentliche Teile einer erfindungsgemäßen Werkzeugmaschine zur Durchführung des erfindungsgemäßen Verfahrens gemäß einem dritten Ausführungsbeispiel der vorliegenden Offenbarung;
Fig. 6 einen Ausschnitt der Werkzeugmaschine zur Durchführung des erfindungsgemäßen Verfahrens aus Fig. 5,
Fig. 7 wesentliche Teile einer erfindungsgemäßen Werkzeugmaschine zur Durchführung des erfindungsgemäßen Verfahrens gemäß einem vierten Ausführungsbeispiel der vorliegenden Offenbarung.
Fig. 8 ein Ablaufdiagramm eines Ausführungsbeispiels des erfindungsgemäßen Verfahrens an den Werkzeugmaschinen der Figuren 1, 3 und 5.

### Beschreibung der Ausführungsbeispiele

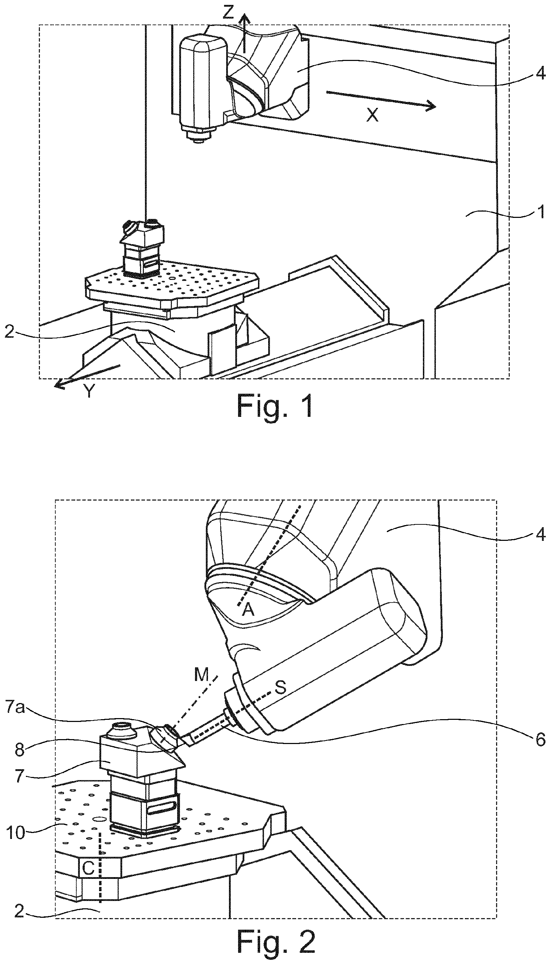

Fig. 1 zeigt die wesentlichen Teile einer erfindungsgemäßen Werkzeugmaschine zur Durchführung des offenbarungsgemäßen Verfahrens gemäß einem ersten Ausführungsbeispiel. Die Werkzeugmaschine hat einen ruhenden Rahmen 1, gegenüber dem eine Maschinekomponente/Werkstückhalterung (Werkstücktisch) 2 mittels einer Linearführung entlang einer translatorischen Y-Maschinenachse (Werkstückhalterung-interne Y-Achse) bewegbar ist.

Gegenüber dem ruhenden Rahmen 1 ist weiterhin eine Spindelhalterung /Werkzeuglagerung 4 mittels zweier Linearführungen entlang zweier translatorischer Maschinenachsen, nämlich der X- Maschinenachse und der Z-Maschinenachse (Werkzeuglagerung-interne X- und Z-Achse) bewegbar. Alle vorstehend genannten drei Maschineachsen X, Y, Z stehen in diesem Ausführungsbeispiel senkrecht aufeinander.

Fig. 2 zeigt einen Ausschnitt der Werkzeugmaschine aus Fig. 1. An die Spindelhalterung 4 für das Werkzeug ist über eine Schwenkachse A ein Gehäuse einer (Werkzeug-)Spindel 6 gekoppelt. Dabei ist die Spindel 6 in dem Gehäuse derart gelagert, dass sie um eine erste rotatorische Maschinenachse, nämlich um die Spindel(längs-)achse S rotieren kann. Die Schwenkachse A ist schräg zu allen drei translatorischen Maschinenachsen X, Y, Z ausgerichtet. Die Spindelachse S ist wiederum schräg zur Schwenkachse A ausgerichtet.

Die Spindel 6 hat eine Schneide 8, die exzentrisch zur Spindelachse S an dem Endabschnitt der Spindel 6 befestigt ist, der einem Werkstück 7 zugewandt ist. Genauer gesagt umkreist die Schneide 8 eine Symmetrieachse M eines rotationssymmetrischen Abschnitts 7a des Werkstücks 7 um dabei den rotationssymmetrischen Abschnitt 7a spanabhebend zu bearbeiten und/oder zu fertigen.

Gegenüber der Maschinekomponente 2 ist eine als Werkstücktisch ausgebildete Werkstückhalterung 10 um eine weitere als Drehachse C ausgebildete rotatorischen Maschinenachse drehbar. Die Drehachse C ist beim gezeigten Ausführungsbeispiel parallel zur translatorischen Z-Maschinenachse ausgerichtet. An der Tischfläche des Werkstücktisches ist das Werkstück 7 befestigt. Die Symmetrieachse M des rotationssymmetrischen Abschnitts 7a ist schräg zum Drehachse C und schräg zur Schwenkachse A und auch unabhängig von der Position der Spindel 8 stets schräg zur Spindelachse S angestellt.

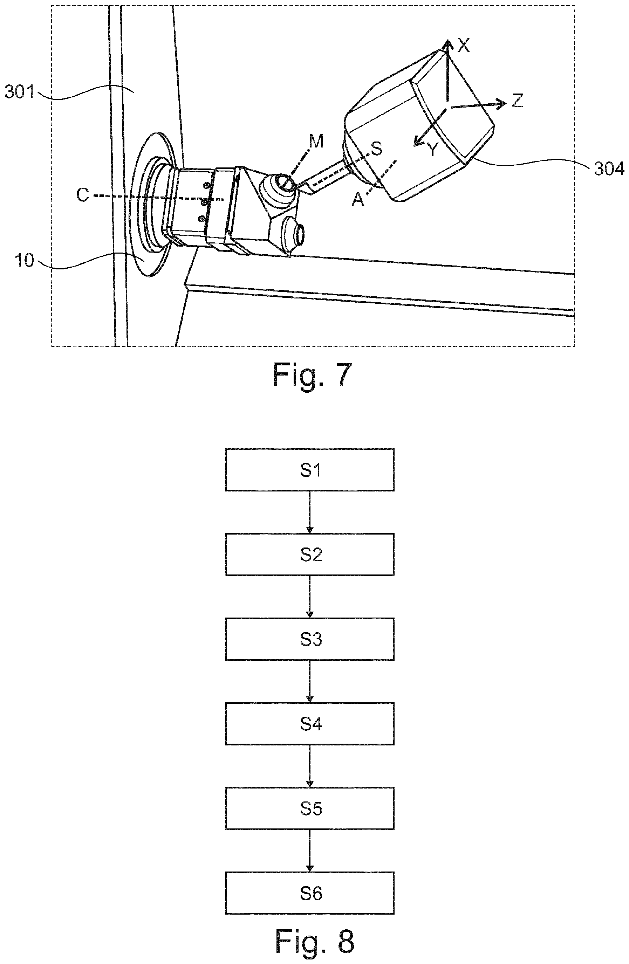

Mit der in den Figuren 1 und 2 dargestellten Werkzeugmaschine wird ein erstes Ausführungsbeispiel des erfindungsgemäßen Verfahrens durchgeführt, bei dem im Schritt S6 (vgl. Fig. 8) alle sechs angesprochenen Maschinenachsen, also die drei translatorischen Maschinenachsen X, Y, Z und die drei rotatorischen Maschinenachsen C, A, S von einem Steuergerät der Werkzeugmaschine simultan angesteuert und bewegt werden. Dabei wird der rotationssymmetrische Abschnitt 7a des Werkstücks 7 durch die um die Symmetrieachse M umlaufende Schneide 8 spanabhabend gefertigt.

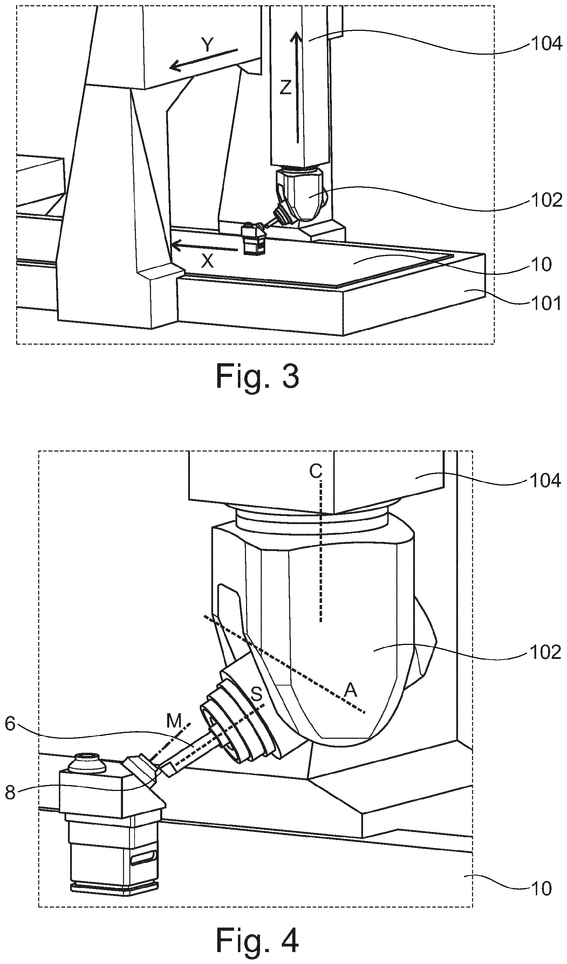

Fig. 3 zeigt die wesentlichen Teile einer erfindungsgemäßen Werkzeugmaschine zur Durchführung des erfindungsgemäßen Verfahrens gemäß einem zweiten Ausführungsbeispiel. Eine Spindelhalterung 104 ist über jeweilige Linearführungen bzgl. aller drei translatorischer Maschinenachsen X, Y, Z bewegbar.

Der als Werkstücktisch ausgebildete Werkstückhalter 10 ist rahmenfest, er ruht also mit dem Rahmen 101 der Werkzeugmaschine.

Fig. 4 zeigt einen Ausschnitt der Werkzeugmaschine aus Fig. 3. Da der als Werkstücktisch ausgebildete Werkstückhalter 10 rahmenfest ist, ruht auch das Werkstück 7 mit seinem rotationssymmetrischen Abschnitt 7a und der Symmetrieachse M.

An dem in Fig. 4 abgebildeten unteren Abschnitt der Spindelhalterung 104 ist über eine als Drehachse C ausgebildete rotatorische Maschinenachse eine als Zwischenteil dienende Maschinenkomponente 102 gekoppelt. Die Drehachse C ist parallel zur translatorischen Maschinenachse Z (vgl. Fig. 3). Die Maschinenkomponente 102 ist gabelartig und trägt ein Gehäuse der Spindel 8. Dabei ist das Gehäuse gegenüber der Maschinenkomponente 102 um eine Schwenkachse A schwenkbar. Die Schwenkachse A ist beim gezeigten Ausführungsbeispiel parallel zur Tischfläche des Werkstückhalters 10 unabhängig von der Position der Drehachse C.

Mit der in den Figuren 3 und 4 dargestellten Werkzeugmaschine wird ein zweites Ausführungsbeispiel des erfindungsgemäßen Verfahrens durchgeführt, bei dem im Schritt S6 (vgl. Fig. 8) alle sechs angesprochenen Maschinenachsen, also die drei translatorischen Maschinenachsen X, Y, Z und die drei rotatorischen Maschinenachsen C, A, S von einem Steuergerät der Werkzeugmaschine simultan angesteuert und bewegt werden. Dabei wird der rotationssymmetrische Abschnitt 7a des Werkstücks 7 durch die um die Symmetrieachse M umlaufende Schneide 8 spanabhabend gefertigt.

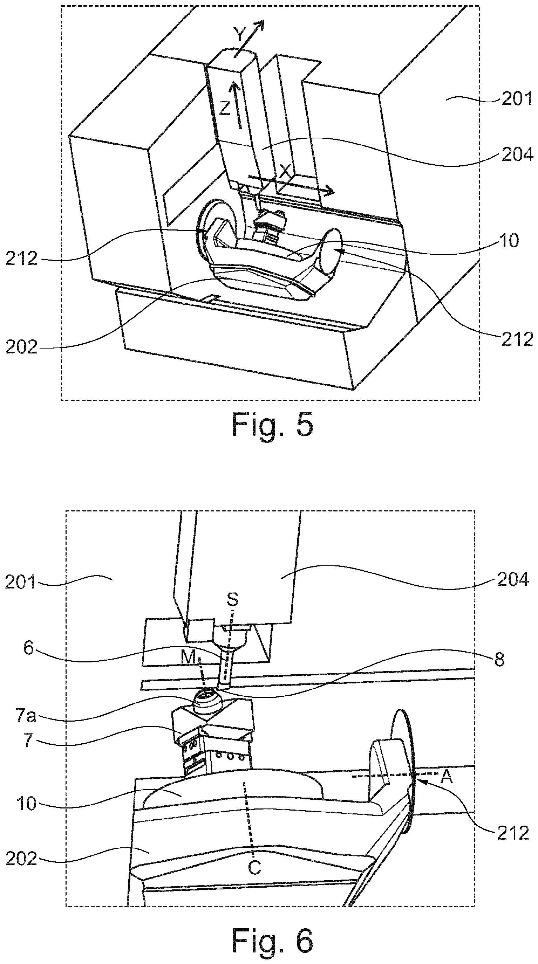

Fig. 5 zeigt die wesentlichen Teile einer erfindungsgemäßen Werkzeugmaschine zur Durchführung des erfindungsgemäßen Verfahrens gemäß einem dritten Ausführungsbeispiel. Eine Spindelhalterung 204 bildet ein Gehäuse, in dem die Spindel 6 um ihre Spindelachse S rotierend gelagert ist. Das Gehäuse ist über jeweilige Linearführungen entlang der drei translatorischen Maschinenachse Y, Y, Z gegenüber einem Werkzeugmaschinenrahmen 201 bewegbar.

Fig. 6 zeigt einen Ausschnitt der Werkzeugmaschine aus Fig. 5. Die Spindelachse S erstreckt sich beim gezeigten Ausführungsbeispiel parallel zur (in Fig. 5 gezeigten) translatorischen Maschinenachse Z.

Das Werkstück 7 ist auf einem als Drehtisch ausgebildeten Werkzeughalter 10 befestigt, der um eine Drehachse C gegenüber einer Maschinenkomponente 202 drehbar ist, die wiederum wie eine Schaukel gegenüber dem Werkzeugmaschinenrahmen 201 gestaltet ist. Genauer gesagt hat die Maschinenkomponente 202 beidseitig des als Drehtisch ausgebildeten Werkzeughalters 10 zwei miteinander fluchtende Schwenkgelenke 212, die zusammen die Schwenkachse A bilden. Die Schwenkachse A ist beim gezeigten Ausführungsbeispiel parallel zur translatorischen Maschinenachse X.

Die Drehachse C und die Schwenkachse A sind senkrecht aufeinander. Um die Schwenkachse A herum wird die Maschinenkomponente 202 mit der Drehachse C und dem Werkzeughalter 10 und dem Werkstück 7 und dem rotationssymmetrischen Abschnitt 7a geschwenkt.

Fig. 7 zeigt die wesentlichen Teile einer erfindungsgemäßen Werkzeugmaschine zur Durchführung des erfindungsgemäßen Verfahrens gemäß einem vierten Ausführungsbeispiel. Die Werkzeugmaschine hat einen ruhenden Rahmen 301, gegenüber dem eine Spindelhalterung 304 mittels dreier Linearführungen entlang aller drei translatorischer X, Y, Z Maschinenachsen bewegbar ist.

An die Spindelhalterung 304 ist über eine Schwenkachse A ein Gehäuse einer Spindel 6 gekoppelt. Die Schwenkachse A ist parallel zur translatorischen Maschinenachsen Y oder fällt sogar mit dieser zusammen. Die Spindel 6 ist in dem Gehäuse derart gelagert, dass sie um eine erste rotatorische Maschinenachse, nämlich um die Spindelachse S rotieren kann. Die Spindelachse S ist wiederum senkrecht zur Schwenkachse A ausgerichtet.

Der Werkzeughalter 10 ist über eine dritte rotatorische Achse, nämlich über eine Drehachse C gegenüber dem Werkzeugmaschinenrahmen 301 gelagert und dabei gesteuert rotierbar.

Mit der in den Figuren 5 und 6 dargestellten Werkzeugmaschine und mit der in Fig. 7 dargestellten Werkzeugmaschine wird ein drittes bzw. viertes Ausführungsbeispiel des erfindungsgemäßen Verfahrens durchgeführt, bei dem im Schritt S6 (vgl. Fig. 8) alle sechs angesprochenen Maschinenachsen, also die drei translatorischen Maschinenachsen X, Y, Z und die drei rotatorischen Maschinenachsen C, A, S von einem Steuergerät der Werkzeugmaschine simultan angesteuert und bewegt werden. Dabei wird der rotationssymmetrische Abschnitt 7a des Werkstücks 7 durch die um die Symmetrieachse M umlaufende Schneide 8 spanabhabend gefertigt.

Fig. 8 zeigt ein Ablaufdiagramm der Ausführungsbeispiele des erfindungsgemäßen Verfahrens an den Werkzeugmaschinen der Figuren 1, 3, 5 und 7.

Gemäß einem ersten Schritt S1 wird aus einer Geometrie des Abschnitts 7a und aus Fertigungsparametern eine Bahn der Schneide 8 bestehend aus NC-Punkten für die Schneide (8) generiert.

Dann werden die NC-Punkte über jeweils drei kartesische Bezugspunktkoordinaten definiert, die bezogen auf ein Bezugspunktachsensystem sind, das zum Werkstück 7 fix ist, wobei die NC-Punkte über eine jeweilige Stellung der Schneide 8 relativ zum Werkstück 7 definiert werden. Die Stellungen sind ein Werkzeugvektor und eine Werkzeugdrehlage.

Gemäß einem zweiten Schritt S2 werden dann aus den Stellungen der Schneide (8) die korrespondierenden Werte der Spindelachse S und der zwei weiteren rotatorischen Maschinenachsen R2, R3 ermittelt.

Gemäß einem dritten Schritt S3 wird dann unter Berücksichtigung der Kinematik der Werkzeugmaschine die gesamte Fahrbewegung simuliert und kollisionsgeprüft.

Gemäß einem vierten Schritt S4 werden die Werte der Spindelachse S und der beiden weiteren rotatorischen Achsen R2, R3 für jeden NC-Punkt zusätzlich zu den kartesischen Bezugspunktkoordinaten im NC-Code ausgegeben.

Gemäß einem fünften Schritt S5 werden die benötigten Werte der physikalischen translatorischen Maschinenachsen X, Y, Z errechnet.

Abschließende werden dann die sechs Achsen X, Y, Z, C, A, S gleichmäßig interpolierend von NC-Punkt zu NC-Punkt simultan bewegt S6.

Bei dem Ausführungsbeispiel des Verfahrens werden Bahnen der Schneide 8 bezogen auf die Werkstückgeometrie programmiert. Hierbei spielt die Lage des Werkstücks 7 in der Werkzeugmaschine zunächst keine Rolle. Der Anwender bestimmt in einem NCJob über Eingangsparameter z.B. wie die Schneide 8 relativ zum Werkstück 7 steht, zu welchem Koordinatensystem die Ausgabe erfolgt, mit welcher Zustellung die Umrundung erfolgt, welche Anfahrstrategie usw.

Wenn es sich um Interpolationsdrehen eines rotationssymmetrischen Abschnitts des Werkstücks 7 handelt, wird hierbei eine Symmetrieachse M definiert, die Schneide 8 umkreist diese spiralförmig. Dadurch ergibt sich in der Fertigung eine rotationssymmetrische Geometrie des Abschnitts 7a und die Lage der Schneide 8 um die Spindelachse S wird so berechnet, dass die Schneide 8 immer dieselbe Ausrichtung zu der Symmetrieachse M hat. Pro Umrundung der Spirale ergibt sich also eine homogene Bewegung um 360°.

Im Anschluss kommt eine virtuelle Werkzeugmaschine in Spiel. Unter Berücksichtigung der Werkstücklage im Werkzeugmaschinenraum bzw. zum Werkzeugmaschinenrahmen gibt es eine eindeutige Lösung, welche Achse X, Y, Z, C, A, S wie zu stehen hat um im Ergebnis an jeder Stelle der Bahn der Schneide 8 relativ zum Werkstück 7 so zu stehen wie es sich aus der Berechnung des NCJobs ergeben hat. Dies wird intern durch die Inverskinematik der virtuellen Werkzeugmaschine berechnet.

Beim Stand der Technik stehen im NC-Code Koordinaten bezogen auf ein sich drehendes Bezugsachsensystem. Bei einer Spiralumrundung dreht sich dieses Bezugsachsensystem einmal um 360°. Bezogen auf dieses Bezugsachsensystem wird die Bewegung ausschließlich durch X/Z-Koordinaten beschrieben. Die Y-Achse ist fix 0. Somit ist der NC-Code sehr leicht lesbar. Die Maschinensteuerung leitet hieraus intern die Stellung der Maschinenachsen ab. Es wird beim Stand der Technik also eine Maschinensteuerung benötigt, die diese Umrechnung mittels eines speziellen Zyklus durchführen kann.

Erfindungsgemäß werden die Werte der Maschinenachsen bezogen auf ein zum Werkstückhalter insbesondere Maschinentisch fixes Koordinatensystem berechnet und diese als NC-Code mit folgenden sechs Werten pro NC-Satz ausgegeben: Positionen X, Y, Z und Maschinenachswerte C, A, S.

Es erfolgt also zunächst eine geometriebezogene Berechnung und grafische 3D-Abbildung der Bahn der Schneide 8.
-> Dann erfolgt die Bestimmung des NC-Codes mit Positionen X, Y, Z und Maschinenachswerten C, A, S in jedem NC-Punkt; dabei ist das Bezugspunktachsensystem fix zum Werkstückhalter 10.
-> Dann bestimmt die Maschinensteuerung die Werte der translatorischen Maschinenachsen X, Y, Z, und fährt die rotatorischen Maschinenachsen C, A, S direkt auf die Werte aus dem NC-Code.
-> Zwischen den NC-Punkten interpoliert die Maschinensteuerung die Werte der sechs Maschinenachsen X, Y, Z, C, A, S gleichmäßig.

### Bezugszeichenliste:

- 1; 101; 201; 301: Werkzeugmaschinenrahmen
- 2; 102; 202: Maschinenkomponente
- 4; 104; 204; 304: Spindelhalterung
- 6: Spindel
- 7: Werkstück
- 7a: rotationssymmetrischer Abschnitt
- 8: Schneide
- 10: Werkstückhalter (Werkstücktisch)
- 212: Schwenkgelenk

- A: Schwenkachse
- C: Drehachse
- M: Symmetrieachse
- R2: zweite rotatorische Maschinenachse
- R3: dritte rotatorische Maschinenachse
- S: Spindel(längs)achse
- S1: Schritt
- S2: Schritt
- S3: Schritt
- S4: Schritt
- S5: Schritt
- S6: Schritt
- X: erste translatorische Maschinenachse
- Y: zweite translatorische Maschinenachse
- Z: dritte translatorische Maschinenachse

## Patentansprüche

1. Verfahren zur Ausführung eines spanenden Interpolationsbearbeitungsvorgangs an zumindest einem Abschnitt (7a) eines Werkstücks (7) unter Verwendung einer Werkzeugmaschine, die eine Werkstückhalterung (10) mit Werkstückaufnahme und eine Werkzeuglagerung mit Werkzeugfutter aufweist, wobei die Werkstückhalterung (10) und die Werkzeuglagerung betrieben werden, um
- eine Translation eines im Werkzeugfutter aufgenommenen Werkzeugs (8) zum, in der Werkstückaufnahme aufgenommenen Werkstück (7) und/oder umgekehrt wahlweise längs einer X-, Y-, und/oder Z-Achse der Werkstückhalterung (10) und/oder des Werkzeugfutters auszuführen,
- eine Neigung des Werkzeugs (8) zum Werkstück (7) und/oder umgekehrt parallel zu einer X-Z-Ebene und/oder einer Y-Z-Ebene der Werkstückhalterung (10) und/oder des Werkzeugfutters auszuführen und
- eine Drehung des Werkzeugs (8) zum Werkstück (7) oder umgekehrt um die Z-Achse der Werkzeughalterung (10) und/oder des Werkzeugfutters auszuführen, **dadurch gekennzeichnet, dass**
die Translation, die Neigung und die Drehung simultan so gesteuert werden, dass über den gesamten Bearbeitungsvorgang in einer fortlaufenden Bewegung eine jeweils vordefinierte Werkzeug-Werkstück-Eingriffsposition mit einer vordefinierten Relativneigungs- und Relativdrehstellung realisiert wird.

2. Verfahren nach Anspruch 1, **dadurch gekennzeichnet, dass** die Werkstückhalterung (10) eine erste Drehachse hat, welche die Z-Achse der Werkstückhalterung (10) ist, wobei die Werkstückaufnahme zentrisch auf der Z-Achse angeordnet wird, die somit auch die Z-Achse der Werkstückaufnahme bildet oder exzentrisch zur Z-Achse der Werkstückhalterung angeordnet wird, wobei im letzteren Fall die Werkstückaufnahme eine Bewegung längs einer Umlaufbahn um die Z-Achse der Werkstückhalterung (10) ausführt.

3. Verfahren nach Anspruch 2 **dadurch gekennzeichnet, dass** die Werkstückhalterung zumindest eine weitere, zweite Drehachse hat, welche die X- oder Y-Achse der Werkstückhalterung bildet, wobei Werkstückhalterung so angesteuert wird, dass deren Werkstückaufnahme eine oszillierende wippen- oder Schaukelbewegung um die zumindest eine weitere zweite Drehachse in der X-Z- oder Y-Z-Ebene der Werkstückhalterung (10) ausführt.

4. Verfahren nach einem der vorhergehenden Ansprüche 1 bis 3, **dadurch gekennzeichnet, dass** aus einer Geometrie des zumindest einen Abschnitts (7a) und aus zumindest einem weiteren Fertigungsparameter aus den Parametern Bearbeitungstiefe, Zustellweg, Zustellgeschwindigkeit und Drehzahl eine Bahn des Werkzeugs (8) bestehend aus NC-Punkten für das Werkzeug generiert wird (S1).

5. Verfahren nach Anspruch 4, **dadurch gekennzeichnet, dass** die NC-Punkte über jeweils drei kartesische Bezugspunktkoordinaten definiert werden, die auf ein Bezugspunktachsensystem bezogen sind, das zum Werkstück (7) fix ist, und wobei die NC-Punkte über eine jeweilige Stellung des Werkzeugs (8) relativ zum Werkstück (7) definiert werden, wobei die Stellung ein Werkzeugvektor und eine Werkzeugdrehlage sind.

6. Verfahren nach Anspruch 5, **dadurch gekennzeichnet, dass** aus den Stellungen des Werkzeugs (8) die korrespondierenden Werte für die Werkzeugfutterposition und -ausrichtung ermittelt werden (S2).

7. Verfahren nach Anspruch 6, **dadurch gekennzeichnet, dass** nach der Ermittlung der Werte für die Werkzeugfutterposition und -ausrichtung die Fahrbewegung über den gesamten Bearbeitungsvorgang simuliert und kollisionsgeprüft wird (S3).

8. Verfahren nach Anspruch 6 oder 7, **dadurch gekennzeichnet, dass** die Werte für die Werkzeugfutterposition und -ausrichtung für jeden NC-Punkt zusätzlich zu den kartesischen Bezugspunktkoordinaten im NC-Code ausgegeben werden (S4).

9. Verfahren nach Anspruch 8, **dadurch gekennzeichnet, dass** die benötigten Werte der physikalischen translatorischen Maschinenachsen (X, Y, Z) errechnet werden (S5), und wobei die sechs Achsen (X, Y, Z, C, A, S) gleichmäßig interpolierend von NC-Punkt zu NC-Punkt simultan bewegt werden (S6).

10. Werkzeugmaschine zum spanenden Interpolationsbearbeiten zumindest eines Abschnitts eines Werkstücks (7), mit einer Steuerungseinrichtung und einem Datenträger, **dadurch gekennzeichnet, dass** auf dem Datenträger ein Verfahren nach einem der vorstehenden Ansprüche 1 bis 9 abgespeichert ist und die Steuerungseinrichtung dafür vorgesehen und ausgebildet ist, die Werkzeugmaschine gemäß dem abgespeicherten Verfahren anzusteuern.

11. Datenträger einer oder für eine Werkzeugmaschine der Interpolationsbearbeitungsbauart, **gekennzeichnet durch** ein darauf abgespeichertes Verfahren gemäß einem der Ansprüche 1 bis 9.
